# EUROPEAN PATENT APPLICATION

(11) **EP 4 831 773 A1**
(43) Date of publication of application: **28.10.2026**
(21) Application number: 25220268.4
(22) Date of filing: 02.12.2025
(51) Int. Cl.: G06F 1/20, G06F 1/26, G06F 1/28, G06F 1/30, H02H 3/087

(54) **POWER SUPPLY OUTPUT PROTECTION STRUCTURE**

(30) Priority: 22.04.2025 TW 114115121
(71) Applicant: Sea Sonic Electronics Co., Ltd., Taipei City (TW)
(72) Inventor: YANG, Hung-Wei, Taipei City (TW); CHOU, Sheng-Chien, Taipei City (TW); HSU, Che-Chia, Taipei City (TW); LEE, Kuan-Pao, Taipei City (TW)
(74) Representative: 2K Patent Partnerschaft mbB

(57) **Abstract**

A power supply output protection structure, including a power output port (21) and a work management circuit (22). The power output port (21) includes a plurality of power supply pins (212) connected in parallel to supply power. The work management circuit (22) performs current detection on each of the power supply pins (212) separately, and the work management circuit (22) protects the power output port (21) according to a detection result of each of the power supply pins (212). This arrangement prevents the problem of power supply pins (212) in the current not being evenly distributed, and the power supply pins (212), to withstand more current, are likely to overheat and cause damage to the power output port (21).

## Description

### Technical Field

The present invention relates to a power supply output protection structure, in particular to a structure that provides output protection for an electrical output port on a power supply.

### Background Art

Increased CPU and GPU computing performance requires more power to support computing. In the case of GPUs, high-end GPUs require 600~1800 watts to operate. To meet the demand for high power output, today's power supplies are equipped with power output ports that specialize in high power output. The power output ports contain a plurality of power supply pins that are connected in parallel.

Although the power supply pins adopt parallel output, but due to the change of output power, power output port material, structure and other factors, resulting in these power supply pins in the current cannot be evenly distributed, the power supply which pins to withstand more current is easy to overheat, a long period of time power supply is prone to make the power output port melting, or in serious cases will lead to the fire of the power supply device, affecting the safety.

### Summary of the Invention

An object of the present invention is to solve the safety problem caused by the inability to evenly distribute an output current of a power output port to a plurality of power supply pins.

In order to achieve the above-mentioned object, the present invention provides a power supply output protection structure, including a power output port and a work management circuit. The power output port includes a plurality of power supply pins connected in parallel to supply power. The work management circuit performs current detection on each of the power supply pins separately, and the work management circuit protects the power output port according to a detection result of each of the power supply pins.

In one example, the power output port comprises a plurality of signal pins, the work management circuit connected to at least one of the signal pins, and the work management circuit performing protection on the power output port by one of followings:
transmitting a load reduction request to a load via at least one of the signal pins; or
stopping the power output port from outputting power.

In one example, the power supply output protection structure comprises a status warning element exposed on a power supply housing, the status warning element generates at least one visual prompt sufficient to attract a user's attention based on a warning signal, and the work management circuit is connected to the status warning element, the work management circuit performs protection on the power output port comprises:
outputting the warning signal to the status warning element.

In one example, a condition for the status warning element to stop generating the visual prompt is that the work management circuit receives a reset signal provided by an external device.

In one example, the external device is disposed on the power supply housing.

In one example, the work management circuit includes a plurality of detection circuits electrically connected to the power supply pins, a signal amplifier connected to the detection circuits, and a microcontroller connected to the signal amplifier.

In one example, the power output port is disposed on an output circuit board of a power supply.

In one example, the power output port includes a housing provided for the power supply pins to be arranged in a matrix.

In one example, the power output port is a specification with a 12V and a 2X6 matrix.

In one example, the work management circuit comprises a temperature sensor electrically connected to the microcontroller and positioned near an area where a temperature of the power output port can be detected.

The above-mentioned technical implementation of the present invention has the following characteristics compared to the conventional technology: the present invention performs current detection on each of the power supply pins individually through the work management circuit, and protects the power output port according to the detection result of each of the power supply pins, so as to prevent the power output port from overheating and burning, thereby improving the safety of the power supply.

### Brief Description of the Drawings

Fig. 1 is a schematic diagram of a unit of an embodiment of an output protection structure of a power supply of the present invention.
Fig. 2 is a schematic diagram of an appearance of a power supply according to an embodiment of an output protection structure of a power supply of the present invention.
Fig. 3 is a circuit diagram of an embodiment of an output protection structure of a power supply of the present invention.
Fig. 4 is a schematic diagram of a unit of another embodiment of an output protection structure of a power supply of the present invention.
Fig. 5 is a schematic diagram of an appearance of a power supply according to another embodiment of an output protection structure of a power supply of the present invention.

### Detailed Description of the Invention

The terminology used in the description of the various embodiments herein is for the purpose of describing particular examples only. As used herein, the singular forms "a", "an" and "the" are intended to include the plural forms as well, unless the context clearly indicates otherwise or the number of elements is intentionally limited. It will be further understood that the term "comprising" when used herein indicates the presence of stated features, elements and/or components, but does not preclude the addition or presence of one or more other features, elements, components and/or groups thereof.

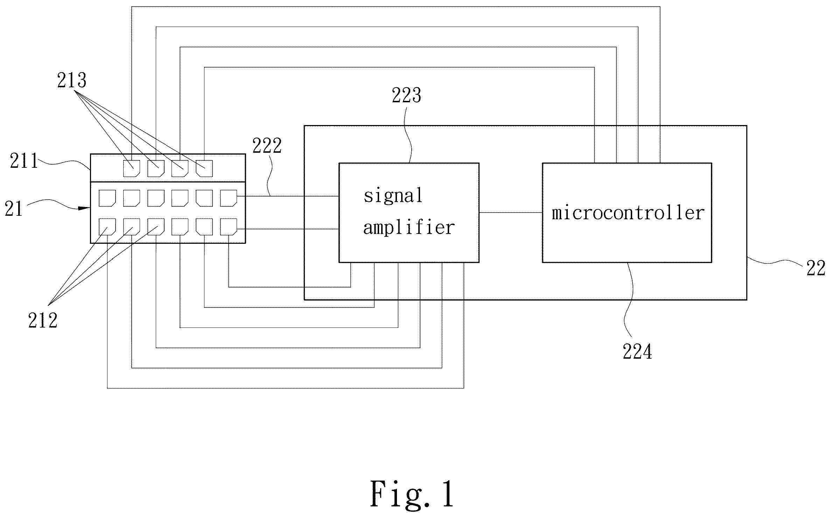

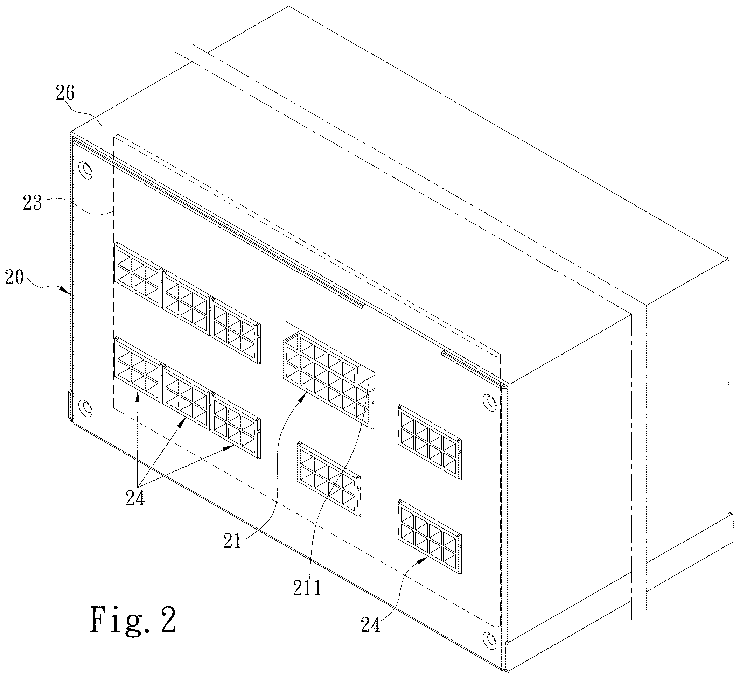

Referring to Fig. 1, Fig. 2 and Fig. 3, the present invention provides a power supply output protection structure, which is applied to a power supply 20. The power supply 20 is designed based on ATX (Advanced Technology Extended) or/and its extended specifications. The power supply output protection structure includes a power output port 21 and a work management circuit 22.

In one example, the power output port 21 is disposed on an output circuit board 23 of the power supply 20. In addition to the power output port 21, the output circuit board 23 is further provided with a plurality of connection ports 24. An output power of the connection ports 24 is set based on the ATX specification. The power output port 21 of the present invention is adapted for the selective insertion of a power transmission wire (not shown), and the power supply 20 provides power to a load connected to the power transmission wire through the power output port 21.

In one example, the load is a display card, with a power requirement of the display card is 12 volts (V) 600~1800 watts. Therefore, the power output port 21 is a specification with a 12V and a 2X6 matrix. The power output port 21 includes a housing 211 and a plurality of power supply pins 212. The housing 211 is provided for the power supply pins 212 to be arranged in a matrix. The power supply pins 212 are connected in parallel for output. More specifically, a number of the power supply pins 212 is 12 and the power supply pins 212 are arranged in a 2X6 matrix. Two of the power supply pins 212 in the same row are respectively set as a 12V pin and a ground pin, and the power supply pins 212 in the same column have the same power supply setting. Although the power supply pins 212 are connected in parallel to supply power, the currents output by the power supply pins 212 may not be uniform, that is, at least one of the power supply pins 212 may bear a larger current. Under long-term power supply, the power supply pins 212 that bear more current have the risk of overheating and burning.

In addition to the foregoing, in one example, the power output port 21 includes a plurality of signal pins 213 connected to the load via a plurality of signal wires. Signals on the signal pins 213 can indicate a current available power of the load.

On the other hand, the work management circuit 22 performs current detection on each of the power supply pins 212 separately, and the work management circuit 22 protects the power output port 21 according to a detection result of each of the power supply pins 212. For example, if a current value detected by at least one of the power supply pins 212 exceeds a threshold, the work management circuit 22 will perform protection to avoid the burning problem caused by continuous power supply. The aforementioned protection may be a warning or a method of reducing output of the power output port 21.

In one example, the work management circuit 22 is connected to at least one of the signal pins 213. The work management circuit 22 protects the power output port 21 by one of followings:
transmitting a load reduction request to the load via at least one of the signal pins 213;
stopping the power output port 21 from outputting power.

As mentioned above, the aforementioned protection can form a multi-level protection. When the current value detected by at least one of the power supply pins 212 exceeds the threshold, the work management circuit 22 may first request the load to reduce its power consumption through at least one of the signal pins 213. During a load reduction process, the work management circuit 22 can be set to observe power supply conditions of the signal pins 213 whose detection results exceed the threshold for a period of time, and release a restriction only after it stabilizes.

The aforementioned load reduction is to define an available power of the load through a setting value of each of the signal pins 213, such as an upper limit of 600 watts or an upper limit of 900 watts. Furthermore, when the current value detected by at least one of the power supply pins 212 obviously exceeds the threshold value, the work management circuit 22 stops the power output port 21 from outputting power to protect the power output port 21.

Furthermore, the above two protection options are implemented in multiple levels. When the work management circuit 22 determines that the status is still within the controllable range, the load can reduce its power consumption. Once the status has reached a higher level of risk, the power output port 21 is stopped from outputting power. It should be understood that in order to avoid damage to the load caused by immediately stopping the output power, the work management circuit 22 does not stop the power supply immediately when executing the stop of the output power, but provides a buffer time so that the load can be closed buffered.

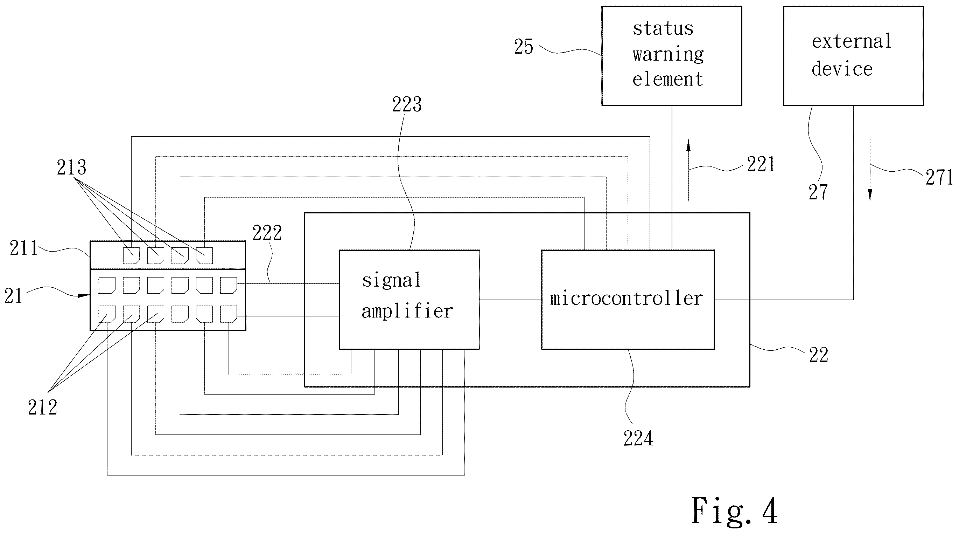

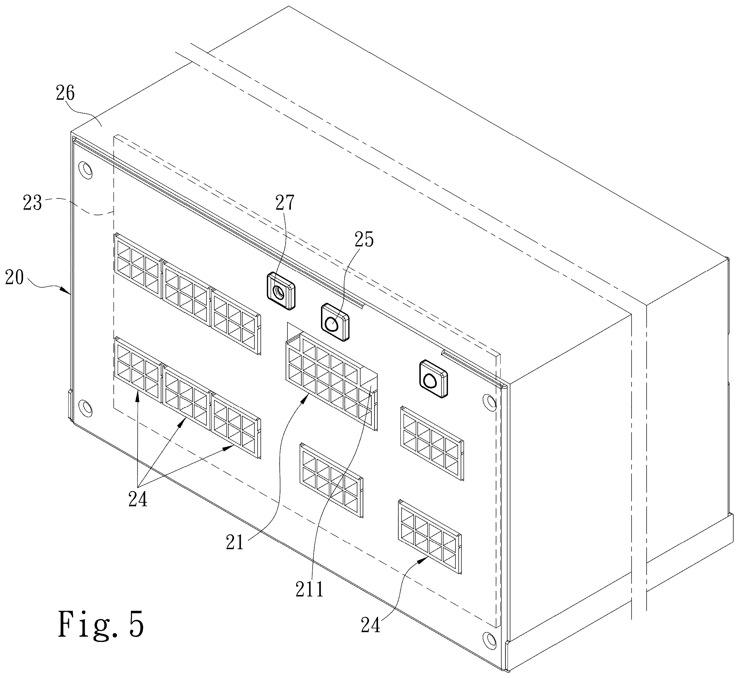

Referring to Fig. 4 and Fig. 5, in addition to the above, in one example, the power supply output protection structure includes a status warning element 25 exposed on a power supply housing 26. The status warning element 25 generates at least one visual prompt sufficient to attract a user's attention based on a warning signal 221, and the work management circuit 22 is connected to the status warning element 25. In this example, the protection performed by the work management circuit 22 on the power output port 21 includes outputting the warning signal 221 to the status warning element 25.

As mentioned above, when the status warning element 25 is a light-emitting element, the at least one visual prompt may be a conspicuous light signal (such as a continuously flashing red light). When the status warning element 25 is a display, the at least one visual prompt can be a text prompt or an image prompt.

Furthermore, this example can be implemented together with the previous embodiment, that is, the work management circuit 22 performing protection on the power output port 21 by one of followings:
outputting the warning signal 221 to the status warning element 25;
transmitting a load reduction request to the load via at least one of the signal pins 213;
stopping the power output port 21 from outputting power.

Further, the work management circuit 22 can be configured to simultaneously perform "outputting the warning signal 221" and "transmitting a load reduction request to the load", or to implement them sequentially based on a tiered protection level concept. In the tiered protection level concept, it is not limited to designate "outputting the warning signal 221" as a fundamental protection level. Instead, "transmitting the load reduction request to the load" may serve as the fundamental protection level, with the aforementioned "outputting the warning signal 221" considered as the next level of protection.

Referring to Fig. 4, in one example where the power supply output protection structure includes the status warning element 25, a condition for the status warning element 25 to stop generating the visual prompt is that the work management circuit 22 receives a reset signal 271 provided by an external device 27. The external device 27 is capable of communicating with the work management circuit 22. In one example, the external device 27 is disposed and exposed on the power supply housing 26 for user to operate to generate the reset signal 271. In addition to the above, the external device 27 may not be disposed on the power supply housing 26, but may communicate with the work management circuit 22 via wired or wireless.

Referring to Fig. 1 and Fig. 4, in one example, the work management circuit 22 includes a plurality of detection circuits 222 electrically connected to the power supply pins 212, a signal amplifier 223 connected to the detection circuits 222, and a microcontroller 224 connected to the signal amplifier 223. The microcontroller 224 has recorded a plurality of execution programs before implementation.

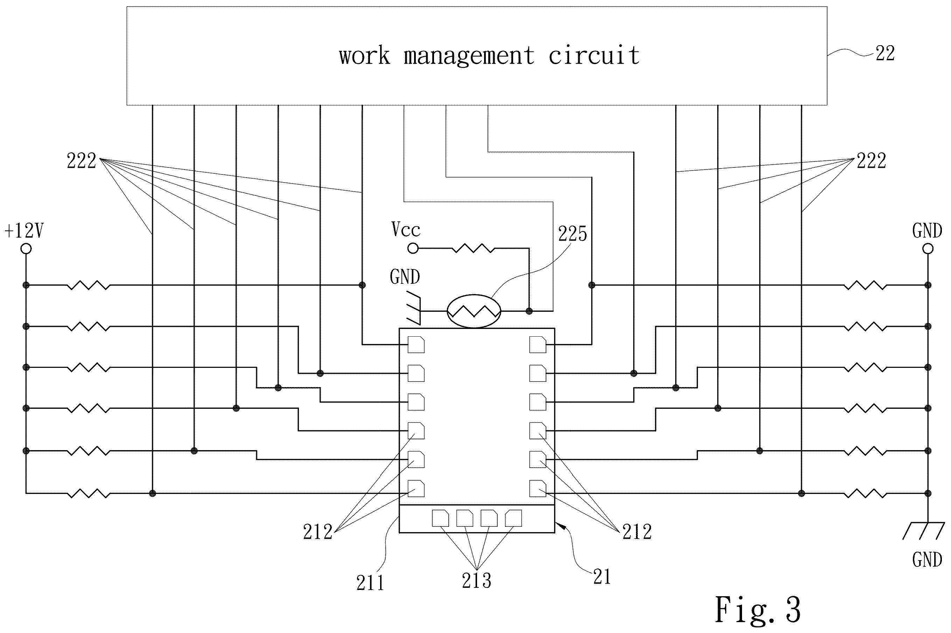

Referring to Fig. 3. In one example, the work management circuit 22 further includes a temperature sensor 225 electrically connected to the microcontroller 224. The temperature sensor 225 is positioned near an area where a temperature of the power output port 21 can be detected. The term "near" may refer to being in direct contact with the housing 211 of the power output port 21, or being placed adjacent to the power output port 21 in a position that can clearly detect its temperature changes. In this example, the work management circuit 22 may incorporate a sensing result of the temperature sensor 225 into a protection factor. When the temperature of the housing 211 of the power output port 21 rises significantly and meets a temperature rise protection condition defined in a program memorized by the microcontroller 224, the work management circuit 22 may protect the power output port 21 according to the aforementioned protection method.

## Claims

1. A power supply output protection structure, comprising:
a power output port (21), comprising a plurality of power supply pins (212) output in parallel; and
a work management circuit (22), performing current detection on each of the plurality of power supply pins (212) separately, and protecting the power output port (21) according to a detection result of each of the plurality of power supply pins (212), preventing the power output port (21) from overheating and burning.

2. The power supply output protection structure according to claim 1, wherein the power output port (21) comprises a plurality of signal pins (213), the work management circuit (22) is connected to at least one of the plurality of signal pins (213), and the work management circuit (22) protects the power output port (21) by one of followings:
transmitting a load reduction request to a load via at least one of the signal pins (213); or
stopping the power output port (21) from outputting power.

3. The power supply output protection structure according to claim 2, wherein the power supply output protection structure comprises a status warning element (25) exposed on a power supply housing (26), the status warning element (25) generates at least one visual prompt sufficient to attract a user's attention based on a warning signal (221), and the work management circuit (22) is connected to the status warning element (25), the work management circuit (22) performs protection on the power output port (21) comprises:
outputting the warning signal (221) to the status warning element (25).

4. The power supply output protection structure according to claim 3, wherein a condition for the status warning element (25) to stop generating the visual prompt is that the work management circuit (22) receives a reset signal (271) provided by an external device (27).

5. The power supply output protection structure according to claim 4, wherein the external device (27) is disposed on the power supply housing (26).

6. The power supply output protection structure according to any one of claims 1 to 5, wherein the work management circuit (22) comprises a plurality of detection circuits (222) electrically connected to the plurality of power supply pins (212), a signal amplifier (223) connected to the detection circuits (222), and a microcontroller (224) connected to the signal amplifier (223).

7. The power supply output protection structure according to claim 6, wherein the power output port (21) is disposed on an output circuit board (23) of a power supply (20).

8. The power supply output protection structure according to claim 7, wherein the power output port (21) comprises a housing (211) provided for the plurality of power supply pins (212) to be arranged in a matrix.

9. The power supply output protection structure according to claim 6, wherein the power output port (21) is a specification with a 12V and a 2x6 matrix.

10. The power supply output protection structure according to claim 6, wherein the work management circuit (22) comprises a temperature sensor (225) electrically connected to the microcontroller (224) and positioned near an area where a temperature of the power output port (21) can be detected.
